# EUROPÄISCHE PATENTANMELDUNG

(11) **EP 1 813 824 A2**
(43) Veröffentlichungstag der Anmeldung: **01.08.2007**
(21) Anmeldenummer: 07001712.4
(22) Anmeldetag: 26.01.2007
(51) Int. Cl.: F16B 12/20

(54) **Verbindungsvorrichtung für Möbelplatten**

(30) Priorität: 31.01.2006 DE 102006004666
(71) Anmelder: KONRAD MERKT GMBH, D-78549 Spaichingen (DE)
(72) Erfinder: Merkt, Manfred, verstorben (DE)
(74) Vertreter: Eisele, Otten, Roth & Dobler

(57) **Zusammenfassung**

Es wird eine Verbindungsvorrichtung für Möbelplatten, insbesondere für Arbeitsplatten wie Küchenarbeitsplatten oder dergleichen nach dem Oberbegriff des Anspruchs 1 vorgeschlagen, die besonders montagefreundlich ist. Dies wird erfindungsgemäß dadurch erreicht, dass an wenigstens einer der Fixiereinheiten (15, 17) eine durch ein Einstecken eines Fixierteils (15) in Richtung quer zur Plattenebene mit dem Verbindungselement (8) zu schließende Steckverbindung (10, 15) vorgesehen ist.

## Beschreibung

Die Erfindung betrifft eine Verbindungsvorrichtung für Möbelplatten, insbesondere für Arbeitsplatten wie Küchenarbeitsplatten nach dem Oberbegriff des Anspruchs 1.

Zur Verbindung von Möbelplatten sind bereits unterschiedliche Beschläge bekannt geworden. In der Patentschrift DE 620 019 wird ein Beschlag beschrieben, bei dem zwei Platten an ihrer Schmalseite auf Stoß gegeneinander verspannt werden, wobei der Beschlag vollständig auf die Flachseite der Platten montiert wird und demnach von dieser hervorsteht.

In der Druckschrift GB 1046,24 wird ein Möbelbeschlag beschrieben, bei dem gelochte Profile mit Exzenterbolzen verspannt werden. Diese Exzenterbolzen werden in Zylinderbohrungen der zu verspannenden Platten eingesetzt und an der Wandung der Bohrung geführt.

Sofern diese Beschläge von außen nicht sichtbar sein sollen, werden sie in Schlitze eingelegt, die an der Schmalseite in der zu verspannenden Platte angebracht werden. Dies ist zum Einen sehr aufwändig, wobei die Platte stirnseitig durch diesen Schlitz geschwächt wird und darüber hinaus ist ein solcher Beschlag bei einer Hohlplatte nicht verwendbar.

Mit der Druckschrift DE 10 2004 054 248 A1 ist eine Verbindungsvorrichtung für Möbelplatten bekannt geworden, bei der ein Riegelelement ohne Werkzeug verspannbar ist. Diese Vorrichtung zeichnet sich darüber hinaus durch eine Symmetrie aus, so dass bei beiden zu verbindenden Platten die gleichen Beschläge verwendbar sind. Diese Beschläge werden jedoch wiederum auf die Flachseite der Möbelplatte aufgesetzt und sind für bestimmte Anwendungen, beispielsweise beim Verbinden von Arbeitsplatten, insbesondere Küchenarbeitsplatten nicht geeignet.

Handelsübliche Verbindungsvorrichtungen für Küchenarbeitsplatten umfassen in der Regel zwei Spannelemente, die in Ausfräsungen auf der Unterseite der beiden zu verbindenden Platten eingelegt werden. Durch eine Bohrung parallel zur Plattenebene wird ein Zuganker in Form eines Schraubbolzens gesteckt und die beiden Spannelemente mit einer Verschraubung verspannt. Die Betätigung dieser Spannvorrichtung ist umständlich. Insbesondere ist das Einführen des Schraubbolzens sowie das Aufschrauben der Schraubenmuttern aufgrund der beengten Platzverhältnisse wenig bedienerfreundlich. Darüber hinaus sind diese Ausführungsformen bei hohlen Platten wiederum nicht verwendbar.

Aufgabe der Erfindung ist es daher, eine Verbindungsvorrichtung für Möbelplatten, insbesondere Arbeitsplatten wie Küchenarbeitsplatten gemäß dem Oberbegriff des Anspruchs 1 vorzuschlagen, die besonders montagefreundlich ist.

Diese Aufgabe wird ausgehend von einem Stand der Technik der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung für Möbelplatten, insbesondere Arbeitsplatten wie Küchenarbeitsplatten oder dergleichen, nach dem Oberbegriff des Anspruchs 1, dadurch aus, dass an wenigstens einer der Fixiereinheiten eine durch Einstecken eines Fixierteils in Richtung quer zur Plattenebene mit dem Verbindungselement zu schließende Steckverbindung vorgesehen ist.

Eine derartige Ausgestaltung ist leicht handzuhaben und darüber hinaus auch für hohle Platten, insbesondere Wabenplatten verwendbar, bei dem das Verbindungselement wenigstens teilweise durch innere Hohlräume verläuft. Das Fixierteil, das quer zur Plattenebene eingesteckt wird, kann sich beidseits an den Plattenwänden abstützen und somit auch zur Verspannung von Hohlplatten verwendet werden.

Vorzugsweise wird wenigstens eine Fixiereinheit mehrteilig, zum Beispiel mit einem Spannelement und einem Aufnahmeelement für das Spannelement vorgesehen, das als Gegenlager für das Spannelement und somit zur Kraftübertragung dient. Das Aufnahmeelement wird bei Betätigung des Spannelements nicht mit bewegt, so dass die Platte selbst weniger strapaziert wird.

Vorteilhafterweise wird das Aufnahmeelement als Hohlkörper zur Aufnahme des Spannelements ausgebildet. Ein solcher Hohlkörper kann beispielsweise eine Rundhülse darstellen, in die das Spannelement eingesetzt wird. Hierdurch ergibt sich eine besonders einfach handzuhabende Ausgestaltung.

Das Spannelement kann in einer besonderen Ausführungsform einen Exzenter aufweisen, so dass durch Drehung des Spannelements eine Verspannung des Verbindungselements auf einfache Weise möglich ist.

In einer besonders vorteilhaften Ausführungsform wird das Verbindungselement weiterhin mit einer Bohrung zur Aufnahme des Spannelements versehen. Zum Einen ermöglicht dies eine leichte Verspannung, in dem beispielsweise ein Exzenter wie oben angeführt in der Bohrung des Verbindungselements gedreht wird. Zum Anderen ist die Betätigung der Steckverbindung, bzw. die Montage des Spannelements an dem Verbindungselement in dieser Ausführung besonders einfach. Das Verbindungselement wird durch eine Bohrung in der Schmalseite der Platte bis in das Aufnahmeelement hinein gesteckt, wobei anschließend quer zum Verbindungselement das Spannelement in dessen Bohrung eingesetzt wird.

In dieser Ausführungsform sind im Übrigen sämtliche Anpassungen an der Platte durch einfache Rundbohrungen realisierbar. Die einzelnen beschriebenen Bauelemente, insbesondere das Aufnahmeelement, das Verbindungselement sowie das Spannelement können auf einfache Weise eingesetzt, miteinander verbunden und durch Drehen des Spannelements im Falle einer Exzenterausbildung einfach verspannt werden. Hierzu kann das Spannelement beispielsweise als Exzenterbolzen ausgebildet sein, der an einem Ende einen Ansatz für ein Werkzeug, beispielsweise einen Innensechskantbohrung aufweist.

Weiterhin wird vorteilhafterweise an dem Verbindungselement auf der dem Spannelement gegenüberliegenden Seite ein Halterungselement für eine zweite Fixiereinheit angebracht. Diese zweite Fixiereinheit dient dazu, die andere Platte, die mit der ersten Platte auf Stoß verbunden werden soll, mit dem Verbindungselement zu verbinden.

Vorzugsweise wird auch bei der zweiten Fixiereinheit ein Fixierteil im montierten Zustand so angeordnet, dass es quer zur Plattenebene verläuft. Insbesondere kann ein derart angeordnetes Fixierteil wiederum in eine einfache Zylinderbohrung eingesetzt werden.

Das Fixierteil der zweiten Fixiereinheit wird in einer besonderen Ausführungsform wenigstens bereichsweise mit einer zylindrischen Mantelfläche versehen, wodurch sich ein Passsitz des Fixierteils in einer zylindrischen Bohrung der zweiten zu verbindenden Platte ergibt.

Die zweite Fixiereinheit wird bevorzugt einstückig ausgebildet, so das neben dem genannten Fixierteil keine weiteren Teile benötigt werden.

Vorteilhafterweise wird weiterhin die zweite Fixiereinheit mit einem Halterungselement für das Verbindungselement versehen, das eine Steckverbindung ermöglicht. Auf diese Weise wird auch bei der zweiten Platte die erfindungsgemäße Vorrichtung besonders einfach montierbar.

Als Halteelement kann beispielsweise ein hinterschneidendes Profil an der zweiten Fixiereinheit vorgesehen werden, das vom Verbindungselement hintergriffen wird. Ein solches hinterschneidendes Profil kann beispielsweise beim Einstecken der zweiten Fixiereinheit quer zur Plattenebene in Eingriff mit dem Verbindungselement gebracht werden. Hierzu wird vorzugsweise das Verbindungselement ebenfalls mit einem dazu passenden hinterschneidenden Profil versehen.

In der beschriebenen Ausführungsvariante kann die Verbindungsvorrichtung auch an der zweiten fixierenden Platte auf die Weise einfach montiert werden, in dem das Verbindungselement in eine schmalseitige Bohrung der Platte gesteckt wird, die auf eine quer verlaufende Zylinderbohrung trifft, in die die zweite Fixiereinheit einsetzbar ist und mit dem Einsetzen in Eingriff mit dem Verbindungselement kommt. Auf diese Weise ist eine Zugvorrichtung hergestellt, wobei die zweite Fixiereinheit wiederum im Falle einer Hohlplatte in der Lage ist, sich an beidseitigen Plattenwänden abzustützen.

Vorzugsweise ist wenigstens eine Höhennivellierungsvorrichtung zum Nivellieren der Höhen der Fixiereinheiten und/oder der Möbelplatten vorgesehen. Beispielsweise umfasst lediglich eine der Fixiereinheiten die Höhennivellierungsvorrichtung. Mit Hilfe der Höhennivellierungsvorrichtung können Herstellungs- und/oder Montagetoleranzen oder dergleichen ausgeglichen werden. Entsprechend dieser Maßnahme ist eine fluchtende Ausrichtung der beiden zu verbindenden Platten in vorteilhafter Weise zu gewährleisten, was die Qualität bzw. Ästhetik der Verbindung verbessert bzw. sicherstellt.

Vorteilhafterweise ist ein Nivellierelement vorgesehen, das in Richtung der Höhe bzw. der Längsachse der Fixiereinheit verstellbar ausgebildet ist. Das Nivellierelement ist in vorteilhafter Weise am Verbindungselement anzuordnen, so dass durch die Verstellung des Nivellierelementes sich das Verbindungselement in Bezug zu der entsprechenden Fixiereinheit relativ verstellt. Dies gewährleistet eine Relativbewegung der beiden Platten in Richtung der Plattendicke bzw. der Längsachse der Fixiereinheit, was zu einer fluchtenden Ausrichtung der Platten verwendet werden kann. Zum Beispiel ist das Nivellierelement als Stellschraube oder dergleichen ausgebildet, so dass durch Drehen der Stellschraube die Längsverstellung in einfachster Weise erfolgen kann.

Grundsätzlich ist von Vorteil, wenigstens ein Führungselement bzw. eine Führungsschiene oder dergleichen vorzusehen, entlang dem/der die Verstellung insbesondere des Verbindungselementes erfolgen kann. Vorzugsweise ist das Führungselement als Halteelement gemäß der Erfindung ausgebildet, was den Aufwand für die erfindungsgemäße Vorrichtung durch die Mehrfachfunktion dieses Elementes verringert.

In einer besonderen Weiterbildung der Erfindung ist das Verbindungselement als Flachblechelement ausgebildet. Ein z.B. ausgestanztes, ausgelasertes, ausgeschnittenes Flachblechelement ist bei hoher Zugfestigkeit besonders einfach und kostengünstig herzustellen und handzuhaben. Auch ist die Höhennivellierung vorteilhaft hiermit zu realisieren. Beispielsweise kann das Nivellierelement bzw. die Stellschraube in vorteilhafter Weise, z.B. senkrecht auf das Flachblechelement einwirken und die Höhennivellierung entsprechend realisieren.

Eine erfindungsgemäße Verbindungsvorrichtung bietet zwar insbesondere bei Verwendung von Hohlplatten wie Wabenplatten oder dergleichen große Vorteile, da die erste Fixiereinheit sowie die zweite Fixiereinheit die Platten jeweils soweit durchsetzen können, dass sie sich an den Außenwänden der Platte abstützen und so ein Gegenlager zur Kraftübertragung für das im hohlen Bereich einer Hohlplatte bzw. Wabenplatte befindliche Verbindungselement bilden können. Die Erfindung bietet vielmehr auch Vorteile bei Platten aus Vollmaterial, um diese zuverlässig zu verspannen. Insbesondere die oben angeführten Weiterbildungen bilden eine sehr leicht handhabbare Plattenverbindung, wobei die Anpassung der Platten und deren Ausrichtung zueinander durch einfache zylindrische Bohrungen und eine dazu passende Form des Verbindungselements realisierbar ist.

Ein Ausführungsbeispiel der Erfindung ist in der Zeichnung dargestellt und wird anhand der Figuren nachfolgend näher erläutert.

Im Einzelnen zeigt:
- Figur 1: eine erfindungsgemäße Vorrichtung in schematischer, perspektivischer Darstellung,
- Figur 2: eine zweite, erfindungsgemäße Vorrichtung mit einer Höhennivellierung schematisch im Schnitt und
- Figur 3: ein erfindungsgemäßes Verbindungselement in einer Flachblechausführung in schematischer Draufsicht.

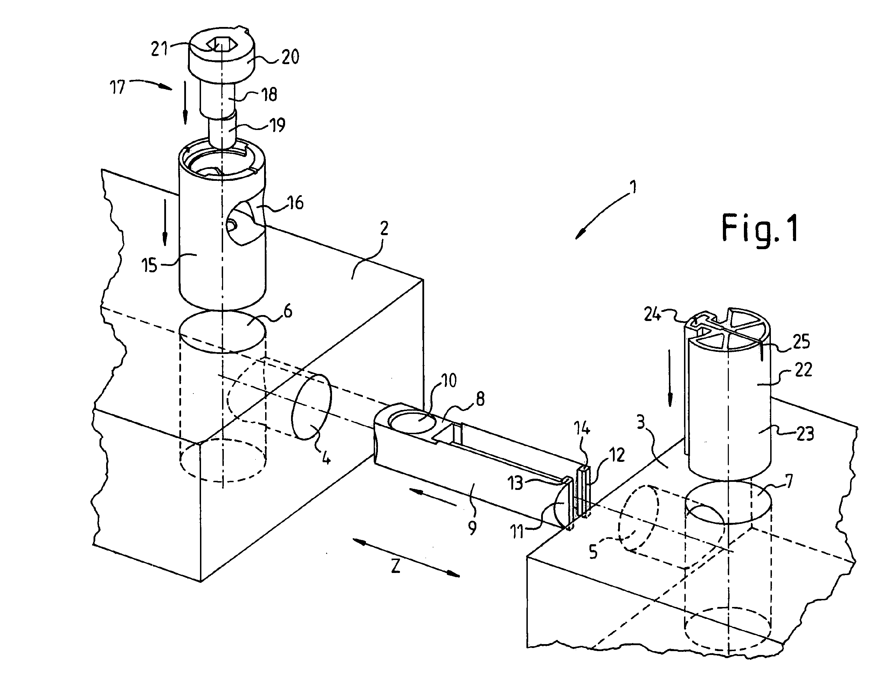

In der Figur 1 ist eine erfindungsgemäße Vorrichtung 1 zur Verbindung zweier Platten 2, 3, dargestellt, die beispielsweise Küchenarbeitsplatten oder dergleichen sein können und auf Stoß an den Schmalseiten miteinander verspannt werden sollen.

Jede der Platten 2, 3 weist eine schmalseitige Bohrung 4, 5 auf, die jeweils auf eine Querbohrung 6, 7 trifft.

Ein Verbindungselement 8 weist eine wenigstens teilweise zylindrische Mantelfläche 9 auf. An einem Ende des Verbindungselements 8 ist eine Querbohrung 10 angebracht, während sich am gegenüberliegenden Ende zwei Schenkel 11, 12 befinden, an deren Endbereiche sich zwei krallenartige Vorsprünge 13, 14 befinden.

Im Bereich der ersten Platte 2 ist eine erste Fixiereinheit mit einem Aufnahmeelement 15 vorgesehen, das hülsenförmig ausgebildet ist und in die Querbohrung 6 der Platte 2 passt. Das hülsenförmige Aufnahmeelement 15 ist mit einer Öffnung 16 versehen, in die das Verbindungselement 8 mit seiner Querbohrung 10 hinein passt.

In Richtung der Achse des Aufnahmeelements 15 ist ein Exzenterbolzen 17 in dieses einsetzbar. Der Exzenterbolzen 17 umfasst einen Exzenter 18, der von zwei Stützabschnitten 19, 20 umgeben ist. Mit den Stützabschnitten 19, 20 kann der Exzenterbolzen 17 im Aufnahmeelement 15 drehbar abgestützt werden. Die Drehung kann dabei mittels eines Werkzeugs mit Hilfe einer Innensechskantbohrung 21 vorgenommen werden.

Auf Seiten der zweiten Platte 3 ist eine zweite Fixiereinheit mit einem Fixierteil 22 vorgesehen, das wenigstens bereichsweise eine zylinderförmige Mantelfläche 23 aufweist, so dass das Fixierteil 22 passend in die Querbohrung 7 einfügbar ist. Das Fixierteil 22 umfasst weiterhin ein hinterschneidendes Profil 24, dessen Form an die krallenförmigen Vorsprünge 13, 14 des Verbindungselements 8 angepasst ist.

Das Fixierteil 22 ist mit einer Fixiernase 25 versehen, die als Richtungsmarkierung und somit als Einsatzhilfe dient. Außerdem kann sich das Fixierteil 22 mit der Fixiernase 25 in der Bohrung halten, so dass ein ungewolltes Herausfallen verhindert wird.

Zur Montage der erfindungsgemäßen Vorrichtung wird zunächst das Aufnahmeelement 15 in die Querbohrung 6 der ersten Platte 2 eingefügt. Anschließend kann das Verbindungselement 8 in die schmalseitige Bohrung 4 eingefügt werden, bis die Bohrung 10 des Verbindungselements 8 in dem hülsenförmigen Aufnahmeelement 15 liegt. Nun kann der Exzenterbolzen 17 soweit in das hülsenförmige Aufnahmeelement 15 eingefügt werden, bis der Exzenter 18 im Bereich der Querbohrung 10 liegt und diese durchsetzt. Auf diese Weise ist das Verbindungselement 8 in dem Aufnahmeelement 15 gefangen, das zugleich als Anschlag oder Gegenlager für den Exzenter 18 dient, der als Spannelement für die erfindungsgemäße Vorrichtung 1 vorgesehen ist.

Zur Befestigung der zweiten Platte 3 wird diese auf Stoß an die Platte 2 herangebracht, wobei das Verbindungselement 8 mit seinen Schenkeln 11, 12 die schmalseitige Bohrung 5 durchsetzt und in die Querbohrung 7 hineinragt. Nun kann das Fixierteil 22 in die Querbohrung 7 eingefügt werden, wobei das hinterschneidende Profil 24 mit den Vorsprüngen 13, 14 der Schenkel 11, 12 des Verbindungselements 8 im Eingriff kommt. Auf diese Weise ergibt sich eine Steckverbindung zwischen dem Fixierteil 22 der zweiten Fixiereinheit und dem Verbindungselement 8, so dass das Verbindungselement 8 in Zugrichtung (vergleiche Pfeil Z) auch mit der zweiten Platte 3 verbunden ist. Das Verspannen der Platte 2, 3 kann nunmehr einfach durch Drehen mittels eines Imbussschlüssels an dem Exzenterbolzen 17 vorgenommen werden. Hierdurch werden die Platten 2, 3 auf Stoß aneinander gefügt und verspannt.

Wie an diesem Ausführungsbeispiel erkennbar ist, sind zur Montage der erfindungsgemäßen Verbindungsvorrichtung in den Platten 2, 3 lediglich jeweils zwei Bohrungen, eine schmalseitige Bohrung 4, 5 sowie eine Querbohrung 6, 7 anzubringen. Die Anpassung der Platten 2, 3 ist somit denkbar einfach. Durch die Form des Verbindungselements 8 und die Führung der Innenflächen der schmalseitigen Bohrungen 4, 5 sind die beiden Platten 2, 3 eben und auf gleicher Höhe zueinander ausgerichtet.

Das Einfügen der Vorrichtung sowie das Verspannen der Platte gestaltet sich äußerst montagefreundlich.

Darüber hinaus ist eine erfindungsgemäße Verbindungsvorrichtung auch bei Hohlplatten verwendbar, da sowohl die erste Fixiereinheit 15, 17 in der Lage ist, einen inneren Hohlraum der Platte 2 (nicht eingezeichnet) zu überbrücken und an Wandplatten, die die Ober- bzw. Unterseite der Platte 2 bilden, abzustützen. Somit kann das Aufnahmeelement 15 der ersten Fixiereinheit 15, 17 ein Gegenlager für den Exzenterbolzen 17 bilden, auch wenn der Exzenter 18 und die Bohrung 10 des Verbindungselements 8 in einem Hohlraum der Platte 2 angeordnet sind.

Genauso ist auch auf der gegenüberliegenden Seite im Bereich der Platte 3 die zweite Fixiereinheit mit dem Fixierteil 22 in der Lage, eine hohle Platte 3 zu durchsetzen und sich wandseitig abzustützen. Auch hier ist das Fixierteil 22 in der Lage, einen zuverlässigen Halt für das Verbindungselement 8 bzw. deren Vorsprünge 13, 14 an dem hinterschneidenden Profil 24 zu gewährleisten, auch wenn sich die Schenkel 11, 12 in einem Hohlraum der Platte 3 befinden.

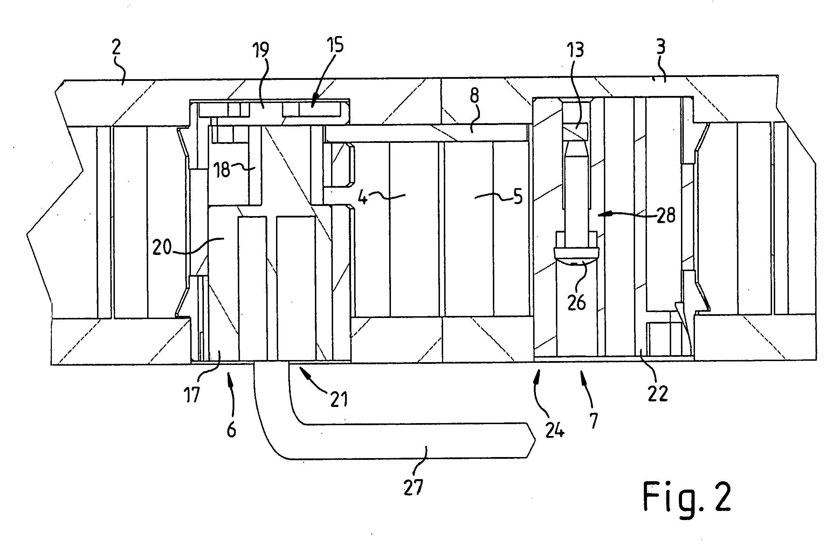

In Figur 2 ist eine zweite Variante der Vorrichtung gemäß der Erfindung in Schnitt dargestellt. Elemente mit im Wesentlichen zur Variante gemäß Figur 1 gleichartiger Funktion weisen die gleichen Bezugszeichen auf.

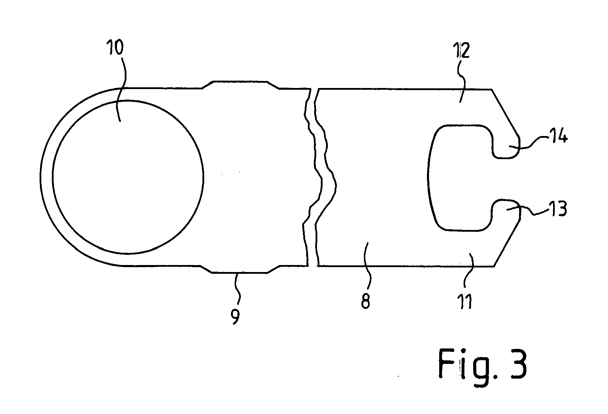

Im Unterschied zur oben genannten Variante weist die Variante der Figur 2 ein als Flachblechelement ausgebildetes Verbindungselement 8 auf. Dies ist bei hoher Zugbelastbarkeit besonders einfach und kostengünstig herstellbar. In Figur 3 ist das als Flachblechelement ausgebildete Verbindungselement 8 gemäß Figur 2 schematisch in der Draufsicht dargestellt.

Weiterhin ist bei der Variante der Figur 2 eine Höhennivellierung mit Hilfe einer Stellschraube 26 vorgesehen. Die Stellschraube 26 wirkt stirnseitig auf das Verbindungselement 8 ein und ist in einem Abschnitt 28 im Fixierteil 22 verankert bzw. gehalten. Durch Drehung der Stellschraube 26 bewegt sich diese bzw. deren Stirnseite drückt oder lässt nach in Richtung Längsachse bzw. der Höhe des Fixierteils 22. Entsprechend verstellt sich das Verbindungselement 8, was zu einem Ausgleich bzw. zu einer Relativbewegung der beiden Platten 2, 3 führt. Entsprechend genau kann die fluchtende Anordnung der beiden Platten 2, 3 mittels der Stellschraube 26 und dem Verbindungselement 8 realisiert werden. Beispielsweise ist eine Höhennivellierung von ca. 2 mm bei derzeit handelsüblichen Möbel- bzw. Arbeitsplatten, insbesondere Küchenplatten, vorgesehen.

Bei der Variante der Figur 2 ist das Profil 24 zum Halten des Verbindungselementes 8 in vorteilhafter Weise zugleich auch als Führungsschiene zum Führen des Verbindungselementes 8 beim Nivellieren mittels der Stellschraube 26 ausgebildet. Die Bohrungen 4, 5 sind derart vorteilhaft auszuführen, dass das Verbindungselement 8 entsprechend quer zur Plattenoberfläche bzw. Arbeitsfläche verstellt werden kann.

Zur Veranschaulichung ist in Figur 2 noch ein sog. Inbusschlüssel 27 abgebildet, mit dem die Verriegelung der Vorrichtung gemäß der Erfindung bzw. die Verstellung des Exzenterbolzens 17 ausgeführt werden kann.

Die erfindungsgemäße Vorrichtung ist daher nicht nur äußerst montagefreundlich, sondern sie ermöglicht auch das Verspannen zweier auf Stoß miteinander zu verbindender Hohlplatten. Derartige Hohlplatten, insbesondere in Form von Wabenplatten werden zusehens vermehrt als Arbeitsplatten eingesetzt. Diese Platten bieten gegenüber Platten aus Vollmaterial den Vorteil des geringeren Materialeinsatzes und somit eines deutlich reduzierten Gewichts. Sie lassen sich daher einfacher und kräfteschonender tragen und vor Ort montieren.

### Bezugszeichenliste:

- 1: Vorrichtung
- 2: Platte
- 3: Platte
- 4: schmalseitige Bohrung
- 5: schmalseitige Bohrung
- 6: Querbohrung
- 7: Querbohrung
- 8: Verbindungselement
- 9: Mantelfläche
- 10: Querbohrung
- 11: Schenkel
- 12: Schenkel
- 13: Vorsprung
- 14: Vorsprung
- 15: Aufnahmeelement
- 16: Öffnung
- 17: Exzenterbolzen
- 18: Exzenter
- 19: Stützabschnitt
- 20: Stützabschnitt
- 21: Innensechskantbohrung
- 22: Fixierteil
- 23: Zylindermantelfläche
- 24: hinterschneidendes Profil
- 25: Fixiernase
- 26: Stellschraube
- 27: Schlüssel
- 28: Abschnitt

## Patentansprüche

1. Verbindungsvorrichtung für Möbelplatten, insbesondere Arbeitsplatten wie Küchenarbeitsplatten, oder dergleichen, mit der die Platten auf Stoß an einer Schmalseite verbindbar sind, mit einem Verbindungselement, das sich im verbundenen Zustand über zwei zu verbindende Platten erstreckt und mit Fixiereinheiten, mittels denen das Verbindungselement an den Platten befestigbar ist, **dadurch gekennzeichnet, dass** an wenigstens einer der Fixiereinheiten (15, 17, 22) eine durch Einstecken eines Fixierteils (15) in Richtung quer zur Plattenebene mit dem Verbindungselement (8) zu schließende Steckverbindung (10, 15) vorgesehen ist.

2. Vorrichtung nach Anspruch 1, **dadurch gekennzeichnet, dass** die Fixiereinheit ein Spannelement (17) und ein Aufnahmeelement (15) umfasst, das als Gegenlager für das Spannelement (17) dient.

3. Vorrichtung nach einem der vorgenannten Ansprüche, **dadurch gekennzeichnet, dass** das Aufnahmeelement (15) als Hohlkörper zur Aufnahme des Spannelements (17) ausgebildet ist.

4. Vorrichtung nach einem der vorgenannten Ansprüche, **dadurch gekennzeichnet, dass** die erste Fixiereinheit eine Rundhülse als Aufnahmeelement (15) umfasst.

5. Vorrichtung nach einem der vorgenannten Ansprüche, **dadurch gekennzeichnet, dass** das Spannelement einen Exzenter (17) umfasst.

6. Vorrichtung nach einem der vorgenannten Ansprüche, **dadurch gekennzeichnet, dass** das Verbindungselement (8) in montierter Position Bohrungen (4, 5) in den Schmalseiten der Platten (2, 3) durchsetzt.

7. Vorrichtung nach einem der vorgenannten Ansprüche, **dadurch gekennzeichnet, dass** das Verbindungselement (8) eine Bohrung (10) zur Aufnahme des Spannelements (17) umfasst.

8. Vorrichtung nach einem der vorgenannten Ansprüche, **dadurch gekennzeichnet, dass** das Verbindungselement (8) auf der der Bohrung (10) für das Spannelement (8) gegenüberliegenden Seite ein Halterungselement (13, 14) für eine zweite Fixiereinheit (22) aufweist.

9. Vorrichtung nach einem der vorgenannten Ansprüche, **dadurch gekennzeichnet, dass** die zweite Fixiereinheit (22) im montierten Zustand quer zur Plattenebene der zweiten Platte (3) verläuft.

10. Vorrichtung nach einem der vorgenannten Ansprüche, **dadurch gekennzeichnet, dass** die zweite Fixiereinheit ein zweites Fixierteil (22) mit wenigstens bereichsweise zylindrischer Mantelfläche aufweist.

11. Vorrichtung nach einem der vorgenannten Ansprüche, **dadurch gekennzeichnet, dass** die zweite Fixiereinheit (22) ein Halteelement (24) für das Verbindungselement aufweist.

12. Vorrichtung nach einem der vorgenannten Ansprüche, **dadurch gekennzeichnet, dass** die zweite Fixiereinheit (22) ein hinterschneidendes Profil (24) aufweist, das eine Steckverbindung mit dazu passenden Halteelementen (13, 14) des Verbindungselements (8) bildet.

13. Vorrichtung nach einem der vorgenannten Ansprüche, **dadurch gekennzeichnet, dass** wenigstens eine Höhennivellierungsvorrichtung zum Nivellieren der Höhen der Fixiereinheiten (15, 22) und/oder der Möbelplatten (2, 3) vorgesehen ist.

14. Vorrichtung nach einem der vorgenannten Ansprüche, **dadurch gekennzeichnet, dass** das Verbindungselement (8) als Flachblechelement (8) ausgebildet ist.
